# EUROPEAN PATENT SPECIFICATION

(11) **EP 2 874 368 B1**
(45) Date of publication and mention of the grant of the patent: **04.05.2016**
(21) Application number: 13819319.8
(22) Date of filing: 04.06.2013
(51) Int. Cl.: H04L 29/06, H04L 12/24, H04L 12/701

(54) **METHOD AND DEVICE FOR GENERATING AGGREGATE LAYER NETWORKMAP AND AGGREGATE LAYER COSTMAP**
VERFAHREN UND VORRICHTUNG ZUR ERZEUGUNG EINER AGGREGATSCHICHT-NETZWERKKARTE UND EINER AGGREGATSCHICHT-KOSTENKARTE
PROCÉDÉ ET DISPOSITIF POUR GÉNÉRER UNE CARTE DE RÉSEAU DE COUCHES AGRÉGÉES ET UNE CARTE DE COÛT DE COUCHES AGRÉGÉES

(30) Priority: 16.07.2012 CN 201210245654
(43) Date of publication of application: 20.05.2015
(73) Proprietor: Huawei Technologies Co., Ltd., Longgang District Shenzhen, Guangdong 518129 (CN)
(72) Inventor: CAI, Yunfei, Shenzhen Guangdong 518129 (CN); WU, Xingfen, Shenzhen Guangdong 518129 (CN); WANG, Yang, Shenzhen Guangdong 518129 (CN)
(74) Representative: Gill Jennings & Every LLP
(86) International application number: PCT/CN2013/076677
(87) International publication number: WO 2014/012400

(56) References cited:
- EP-A1- 2 391 092
- EP-A1- 2 461 547
- CN-A- 101 997 891
- CN-A- 102 316 091
- US-A1- 2011 202 638
- ALIMI R ET AL: "ALTO Protocol; draft-ietf-alto-protocol-12.txt", ALTO PROTOCOL; DRAFT-IETF-ALTO-PROTOCOL-12.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 11 July 2012 (2012-07-11), pages 1-72, XP015084070, [retrieved on 2012-07-11]
- SCHWAN W ROOME ALCATEL-LUCENT BELL LABS N: "ALTO Incremental Updates; draft-schwan-alto-incr-updates-01.txt", ALTO INCREMENTAL UPDATES; DRAFT-SCHWAN-ALTO-INCR-UPDATES-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 12 March 2012 (2012-03-12), pages 1-22, XP015081950, [retrieved on 2012-03-12]

## Description

### TECHNICAL FIELD

The present invention relates to the field of network transmission, and in particular, to a method and an apparatus for generating an aggregation layer networkmap and an aggregation layer costmap.

### BACKGROUND

At present, an application layer traffic optimization (ALTO for short, Application Layer Traffic Optimization) service is widely applied to applications, such as a peer-to-peer technology P2P (P2P for short, Peer-to-Peer) application and a content delivery network, that need to select node resources. By using the ALTO service, a network application may request, by using the ALTO protocol, information about a lower-layer network topology, network traffic, and the like from an Internet service provider (ISP for short, Internet Service Provider) or a content provider (CP for short, Content Provider). According to the information, an application layer traffic optimization client (Alto client) and a resource provider may collaborate in nonrandom selection of node resources, so as to reduce a node cost and unnecessary cross-domain traffic. Therefore, network resources are utilized more efficiently and fairly under the condition of improving or maintaining high performance of an application.

In the ALTO protocol, a provider-defined network location identifier PID (PID for short, Provider-defined Network Location identifier) is a set formed by multiple terminals. The set may be a subnetwork, a group of subnetworks, a city area, an Internet service provision point or office end POP (POP for short, Point of Presence), an autonomous system, or a group of autonomous systems. A homing relationship between a terminal and a PID is called a networkmap (networkmap); a node cost for connecting any two PIDs is called a cost (cost). An application layer traffic optimization server (Alto server) uses a cost between PIDs to indicate a priority value of network resources. A set of costs between all PIDs is called a costmap (costmap). A terminal aggregation degree of a PID, that is, a range in which terminals are grouped into a PID, is called a PID granularity. A finer PID granularity indicates higher navigation precision of an ALTO service.

In the prior art, an ALTO service provides a navigation service with a same PID granularity for all users. However, an ALTO server can only provide one PID granularity, that is, provide only one networkmap and one costmap. For user requirements of different navigation precision (for example, video on demand, file download, and web browsing), if a PID granularity is fine, a user requirement of high navigation precision may be met, but for a user who has a low requirement on navigation precision, a fine PID granularity brings a waste of network resources; if a PID granularity is coarse, a user requirement of low navigation precision may be met, but service quality for a user who has a high requirement on navigation precision is inevitably affected.

EP2461547 A1 relates to techniques for using routing information obtained by operation of network routing protocols to dynamically generate network and cost maps for an application-layer traffic optimization (ALTO) service. For example, an ALTO server of an autonomous system (AS) receives routing information from routers of the AS by listening for routing protocol updates outputted by the routers and uses the received topology information to dynamically generate a network map of PIDs that reflects a current topology of the AS and/or of the broader network that includes the AS. Additionally, the ALTO server dynamically calculates inter-PID costs using received routing information that reflects current link metrics. The ALTO server then assembles the inter-PID costs into a cost map that the ALTO server may provide, along with the network map, to clients of the ALTO service.

### SUMMARY

Embodiments of the present invention provide a method and an apparatus for generating an aggregation layer networkmap and an aggregation layer costmap.

To achieve the foregoing objective or another objective, the following technical solutions are used in the embodiments of the present invention:

According to a first aspect, a method for generating an aggregation layer networkmap and an aggregation layer costmap is provided, including:
determining, by an application layer traffic optimization server, Alto server, structural information of n aggregated network location identifiers PIDs, where the n aggregated PIDs are formed by aggregation of m basic PIDs, and n is less than m;
determining, by the Alto server according to a base layer networkmap corresponding to the m basic PIDs and structural information of each aggregated PID, an aggregation layer networkmap corresponding to the n aggregated PIDs, where the structural information of each aggregated PID indicates a basic PID separately included in each aggregated PID,
wherein the base layer networkmap comprises a correspondence between the m basic PIDs and IP addresses of network devices covered by the m basic PIDs;
the aggregation layer networkmap comprises a correspondence between the n aggregated PIDs and the IP addresses of the network devices covered by the m basic PIDs,
wherein each IP address in the IP addresses of the network devices covered by the m basic PIDs is corresponding to a unique basic PID, and each IP address in the IP addresses of the network devices covered by the m basic PIDs is corresponding to a unique aggregated PID; and
determining, by the Alto server according to a base layer costmap corresponding to the m basic PIDs and the structural information of each aggregated PID, an aggregation layer costmap corresponding to the n aggregated PIDs.

In a first possible implementation manner according to the first aspect,
the base layer costmap includes a cost from each basic PID in the m basic PIDs to each of other basic PIDs in the m basic PIDs; and the aggregation layer costmap includes a cost from each aggregated PID in the n aggregated PIDs to each of other aggregated PIDs in the n aggregated PIDs.

In a second possible implementation manner according to the first possible implementation manner of the first aspect or the second possible implementation manner of the first aspect, the n aggregated PIDs include a first aggregated PID and a second aggregated PID, and the aggregation layer costmap includes a cost from the first aggregated PID to the second aggregated PID and a cost from the second aggregated PID and the first aggregated PID;
a method for determining the cost from the first aggregated PID to the second aggregated PID includes:
determining a cost from each basic PID in the first aggregated PID to each basic PID in the second aggregated PID separately; and processing, according to a preset algorithm, the cost from each basic PID in the first aggregated PID to each basic PID in the second aggregated PID separately, so as to obtain the cost from the first aggregated PID to the second aggregated PID; and
for each aggregated PID in the n aggregated PIDs, a cost from each aggregated PID in the n aggregated PIDs to each of other aggregated PIDs in the n aggregated PIDs is determined according to the method for determining the cost from the first aggregated PID to the second aggregated PID.

In a third possible implementation manner according to the first aspect or any possible implementation manner of the first aspect, the method further includes:
sending the aggregation layer networkmap and the aggregation layer costmap to an Alto client after the Alto server determines, according to a request message sent by the application layer traffic optimization client,
Alto client, that the Alto client requests to acquire the aggregation layer networkmap and the aggregation layer costmap;
or,
sending the base layer networkmap and the base layer costmap to an Alto client after the Alto server determines, according to a request message sent by the application layer traffic optimization client, Alto client, that the Alto client requests to acquire the base layer networkmap and the base layer costmap;
or,
sending a networkmap with a higher priority in the base layer networkmap and the aggregation layer networkmap to an Alto client, and further sending a costmap with a higher priority in the base layer costmap and the aggregation layer costmap after the Alto server determines, according to a request message sent by the application layer traffic optimization client, Alto client, that the Alto client requests to acquire the base layer networkmap, the base layer costmap, the aggregation layer networkmap, and the aggregation layer costmap;
or,
sending a default networkmap and a default costmap to the Alto client after the Alto server determines that a request message, sent by an application layer traffic optimization client, Alto client, for requesting to acquire a networkmap and a costmap does not indicate a requested networkmap or a requested costmap.

According to a second aspect, a server is provided, including:
a first determining module, configured to determine structural information of n aggregated network location identifiers PIDs, where the n aggregated PIDs are formed by aggregation of m basic PIDs, and n is less than m;
a second determining module, configured to determine, according to a base layer networkmap corresponding to the m basic PIDs and structural information of each aggregated PID, an aggregation layer networkmap corresponding to the n aggregated PIDs, where the structural information of each aggregated PID indicates a basic PID separately included in each aggregated PID,
wherein the base layer networkmap comprises a correspondence between the m basic PIDs and IP addresses of network devices covered by the m basic PIDs;
the aggregation layer networkmap comprises a correspondence between the n aggregated PIDs and the IP addresses of the network devices covered by the m basic PIDs,
wherein each IP address in the IP addresses of the network devices covered by the m basic PIDs is corresponding to a unique basic PID, and each IP address in the IP addresses of the network devices covered by the m basic PIDs is corresponding to a unique aggregated PID; and a third determining module, configured to determine, according to a base layer costmap corresponding to the m basic PIDs and the structural information of each aggregated PID, an aggregation layer costmap corresponding to the n aggregated PIDs.

In a first possible implementation manner according to the second aspect, the base layer costmap includes a cost from each basic PID in the m basic PIDs to each of other basic PIDs in the m basic PIDs; and the aggregation layer costmap includes a cost from each aggregated PID in the n aggregated PIDs to each of other aggregated PIDs in the n aggregated PIDs.

In a second possible implementation manner according to the first possible implementation manner of the second aspect or the second possible implementation manner of the second aspect, the n aggregated PIDs include a first aggregated PID and a second aggregated PID, and the aggregation layer costmap includes a cost from the first aggregated PID to the second aggregated PID and a cost from the second aggregated PID and the first aggregated PID; and
the third determining module is configured to determine, for each aggregated PID in the n aggregated PIDs, a cost from each aggregated PID in the n aggregated PIDs to each of other aggregated PIDs in the n aggregated PIDs according to a method for determining the cost from the first aggregated PID to the second aggregated PID, where the method for determining the cost from the first aggregated PID to the second aggregated PID includes: determining a cost from each basic PID in the first aggregated PID to each basic PID in the second aggregated PID separately; and processing, according to a preset algorithm, the cost from each basic PID in the first aggregated PID to each basic PID in the second aggregated PID separately, so as to obtain the cost from the first aggregated PID to the second aggregated PID.

In a third possible implementation manner according to the second aspect or any possible implementation manner of the second aspect, the server further includes:
a sending module, configured to send the aggregation layer networkmap and the aggregation layer costmap to an Alto client after it is determined, according to a request message sent by the application layer traffic optimization client, Alto client, that the Alto client requests to acquire the aggregation layer networkmap and the aggregation layer costmap; or configured to send the base layer networkmap and the base layer costmap to an Alto client after the Alto server determines, according to a request message sent by the application layer traffic optimization client Alto client, that the Alto client requests to acquire the base layer networkmap and the base layer costmap; or
configured to send a networkmap with a higher priority in the base layer networkmap and the aggregation layer networkmap to an Alto client, and further send a costmap with a higher priority in the base layer costmap and the aggregation layer costmap after the Alto server determines, according to a request message sent by the application layer traffic optimization client, Alto client, that the Alto client requests to acquire the base layer networkmap, the base layer costmap, the aggregation layer networkmap, and the aggregation layer costmap; or
configured to send a default networkmap and a default costmap to the Alto client after the Alto server determines that a request message, sent by an application layer traffic optimization client, Alto client, for requesting to acquire a networkmap and a costmap does not indicate a requested networkmap or a requested costmap.

A PID granularity of an aggregation layer networkmap and an aggregation layer costmap that are generated according to the method provided in the embodiments of the invention is coarser than a PID granularity of a base layer networkmap and a base layer costmap, while a total amount of data of the aggregation layer networkmap and the aggregation layer costmap is significantly less than that of the base layer networkmap and the base layer costmap. Because networkmaps and costmaps with different PID granularities exist, a corresponding networkmap and a corresponding costmap may be provided according to a requirement of a client on a PID granularity.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for generating an aggregation layer networkmap and an aggregation layer costmap according to an embodiment of the present invention;
FIG. 2 is a flowchart of a method for generating an aggregation layer networkmap and an aggregation layer costmap according to another embodiment of the present invention;
FIG. 3 is a schematic diagram of a server according to an embodiment of the present invention; and
FIG. 4 is a schematic diagram of a server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

A provider-defined network location identifier (PID for short, Provider-defined Network Location identifier) described in the embodiments of the present invention is a set that includes multiple network devices. The set may be a subnetwork, a group of subnetworks, a city area, a POP (Point of Presence, an Internet service provision point or office end), an autonomous system, or a group of autonomous systems. A homing relationship between a network device and a PID is called a networkmap (networkmap). A set of costs (cost) between multiple PIDs or all PIDs is called a costmap (costmap). A terminal aggregation degree of a PID, that is, a range in which network devices are grouped into a PID, is called a PID granularity. A finer PID granularity indicates higher navigation precision of an application layer traffic optimization (ALTO for short, Application Layer Traffic Optimization) service. The finer a PID granularity, the smaller the number of network devices included in a PID is.

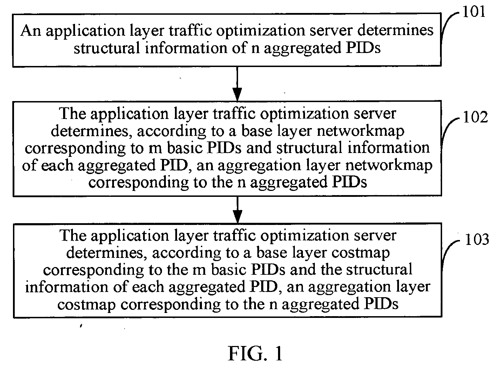

A method for generating an aggregation layer networkmap and an aggregation layer costmap provided in an embodiment of the present invention is shown in FIG. 1, and the method includes the following content:
101. An Alto server determines structural information of n aggregated PIDs.
   The n aggregated PIDs are formed by aggregation of m basic PIDs, and n is less than m. Structural information of each aggregated PID indicates a basic PID separately included in each aggregated PID.
102. The Alto server determines, according to a base layer networkmap corresponding to the m basic PIDs and structural information of each aggregated PID, an aggregation layer networkmap corresponding to the n aggregated PIDs.

The base layer networkmap includes a correspondence between the m basic PIDs and IP addresses of network devices covered by the m basic PIDs. The aggregation layer networkmap includes a correspondence between the n aggregated PIDs and the IP addresses of the network devices covered by the m basic PIDs.

103. The Alto server determines, according to a base layer costmap corresponding to the m basic PIDs and the structural information of each aggregated PID, an aggregation layer costmap corresponding to the n aggregated PIDs.

The base layer costmap includes a cost from each basic PID in the m basic PIDs to each of other basic PIDs in the m basic PIDs. The aggregation layer costmap includes a cost from each aggregated PID in the n aggregated PIDs to each of other aggregated PIDs in the n aggregated PIDs.

A PID granularity of an aggregation layer networkmap and an aggregation layer costmap that are generated according to the method provided in this embodiment of the invention is coarser than a PID granularity of a base layer networkmap and a base layer costmap, that is, the granularity is relatively coarse, while a total amount of data of the aggregation layer networkmap and the aggregation layer costmap is significantly less than that of the base layer networkmap and the base layer costmap. Because networkmaps and costmaps with different PID granularities exist, a corresponding networkmap and a corresponding costmap may be provided according to a requirement of a client on a PID granularity.

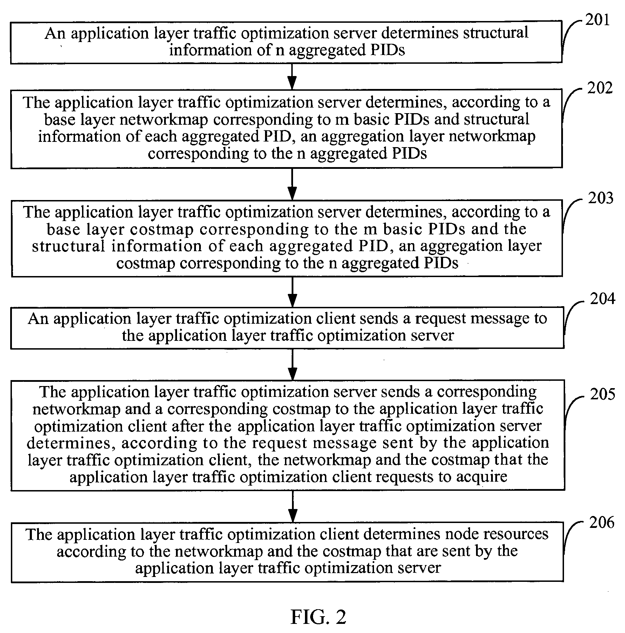

A method provided in another embodiment of the present invention is shown in FIG. 2, and the method includes:
201. An Alto server determines structural information of n aggregated PIDs.

First, the application layer traffic optimization server Alto server establishes, according to network information, m basic PIDs corresponding to a minimum PID granularity and a base layer networkmap and a base layer costmap that are formed by the m basic PIDs.

The base layer networkmap includes a correspondence between the m basic PIDs and IP addresses of network devices covered by the m basic PIDs, and an IP address of each network device is corresponding to a unique basic PID. The base layer costmap includes a cost from each basic PID in the m basic PIDs to each of other basic PIDs in the m basic PIDs. The basic PIDs, the base layer networkmap, and the base layer costmap are determined according to network information such as routing protocol information.

For example, five basic PIDs, that is, PID1, PID2, PID3, PID4, and PID5, are established by using a routing protocol, where PID1 includes network devices with IP addresses being IP1 and IP2, PID2 includes network devices with IP addresses being IP3 and IP4, PID3 includes network devices with IP addresses being IP5 and IP6, PID4 includes network devices with IP addresses being IP7 and IP8, and PID5 includes network devices with IP addresses being IP9 and IP10. IP addresses of the foregoing 10 network devices are separately corresponding to a unique basic PID. A base layer networkmap that includes the five basic PIDs may be expressed as follows: PID1={IP1, IP2}, PID2={IP3, IP4}, PID3={IP5, IP6}, PID4={IP7, IP8}, PID5={IP9, IP10}. PID1={IP1, IP2} indicates that IP1 is corresponding to PID1, and IP2 is corresponding to PID1. Further, PID1={IP1, IP2} may further indicate that PID1 includes or covers a network device with an IP address being IP and a network device with an IP address being IP2, but a networkmap does not necessarily indicate that a PID includes or covers a network device. A base layer costmap includes costs from PID1 to PID2-PID5 respectively (the costs are respectively denoted as cost1-2 to cost1-5), costs from PID2 to PID1 and PID3-PID5 respectively (the costs are respectively denoted as cost 2-1, and cost2-3 to cost2-5), costs from PID3 to PID1-PID2 and PID4-PID5 respectively (the costs are respectively denoted as cost3-1, cost3-2, cost3-4, and cost3-5), and costs from PID4 to PID1-PID3 and PID5 respectively (the costs are respectively denoted as cost4-1 to cost4-3, and cost4-5). Further, same granularity layer indication information may be carried in a base layer networkmap and a base layer costmap, where the granularity layer indication information is used to indicate a PID granularity corresponding to the networkmap and the costmap. Exemplarily, granularity layer indication information may be carried in the base layer networkmap and the base layer costmap by adding a new field or by using an existing field. The same granularity layer indication information carried in the base networkmap and/or the base layer costmap is used to indicate that a PID granularity corresponding to the base layer network map and/or the base layer costmap is a most basic granularity, that is, a granularity with highest precision, which may be denoted as level-0 (level-0).

Subsequently, the Alto server determines the structural information of the n aggregated PIDs.

The n aggregated PIDs are formed by aggregation of m basic PIDs, and n is less than m. Structural information of each aggregated PID indicates a basic PID separately included in each aggregated PID. The structural information may be an algorithm rule generated by using an algorithm and may also be a preset algorithm rule. Specific structural information is determined by an algorithm rule.

Exemplarily, a base layer includes five basic PIDs: PID1, PID2, PID3, PID4, and PID5. PID1 and PID2 may be grouped into PID a of an aggregation layer, and PID3, PID4, and PID5 may be grouped into PID b of the aggregation layer, that is, PID a={PID1, PID2}, PID b={PID3, PID4, PID5}. Alternatively, PID1 and PID2 may be grouped into PID a of the aggregation layer, PID3 and PID4 may be grouped into PID b of the aggregation layer, and PID5 may be grouped into PID c of the aggregation layer, that is, PID a={PID1, PID2}, PID b={PID3, PID4}, PID c={PID5}.

202. The Alto server determines, according to a base layer networkmap corresponding to the m basic PIDs and structural information of each aggregated PID, an aggregation layer networkmap corresponding to the n aggregated PIDs.

The aggregation layer networkmap includes a correspondence between the n aggregated PIDs and the IP addresses of the network devices covered by the m basic PIDs.

For example, an aggregated PID a={PID1, PID2} and an aggregated PID b={PID3, PID4, PID5} are obtained from the basic PID1 to the basic PID5 according to the structural information of the aggregated PIDs. PIDa includes PID1 and PID2, where PID1 includes a network device with an IP address being IP1 and a network device with an IP address being IP2, and PID2 includes a network device with an IP address being IP3 and a network device with an IP address being IP4; therefore, PIDa includes the network device with an IP address being IP1, the network device with an IP address being IP2, the network device with an IP address being IP3, and the network device with an IP address being IP4. Network devices included in PIDb may be determined according to the same principle. In conclusion, an aggregation layer networkmap corresponding to the aggregated PID a and the aggregated PID b may be expressed as follows: PIDa={IP1, IP2, IP3, IP4}, PIDb={IP5, IP6, IP7, IP8, IP9, IP10}.

If an aggregated PID a={PID1, PID2}, an aggregated PID b={PID3, PID4}, and an aggregated PID c={PID5} are obtained from the basic PID1 to the basic PID5 according to the structural information of the aggregated PIDs, it may be determined, according to the principle in the previous instance, that an aggregation layer networkmap corresponding to the aggregated PID a, the aggregated PID b, and the aggregated PID c may be expressed as follows: PIDa={IP1, IP2, IP3, IP4}, PIDb={IP5, IP6, IP7, IP8}, PIDc={IP9, IP10}. IP addresses of the 10 network devices covered by the five basic PIDs in the foregoing aggregation layer networkmap are respectively corresponding to a unique aggregated PID.

203. The Alto server determines, according to a base layer costmap corresponding to the m basic PIDs and the structural information of each aggregated PID, an aggregation layer costmap corresponding to the n aggregated PIDs.

The aggregation layer costmap includes a cost from each aggregated PID in the n aggregated PIDs to each of other aggregated PIDs in the n aggregated PIDs.

If an aggregated PID a={PID1, PID2} and an aggregated PID b={PID3, PID4, PID5} are obtained from the basic PID1 to the basic PID5 according to the structural information of the aggregated PIDs, that is, n is equal to 2, the cost from each aggregated PID in the n aggregated PIDs to each of other aggregated PIDs in the n aggregated PIDs includes: a cost from PIDa to PIDb, and a cost from PIDb to PIDa. If an aggregated PID a={PID1, PID2}, an aggregated PID b={PID3, PID4}, and an aggregated PID c={PID5} are obtained from the basic PID1 to the basic PID5 according to the structural information of the aggregated PIDs, that is, n is equal to 3, the cost from each aggregated PID in the n aggregated PIDs to each of other aggregated PIDs in the n aggregated PIDs includes: a cost from PIDa to PIDb, a cost from PIDa to PIDc, a cost from PIDb to PIDa, a cost from PIDb to PIDc, a cost from PIDc to PIDa, and a cost from PIDc to PIDb.

In this embodiment, a method for determining a cost from any aggregated PID in the n aggregated PIDs to any other aggregated PID in the n aggregated PIDs may be the same. Therefore, after a method for determining a cost from an aggregated PID to another aggregated PID in the n aggregated PIDs is described, a method for determining each aggregated PID in the n aggregated PIDs to each of other aggregated PIDs in the n aggregated PIDs is also determined.

The following uses an example to describe the method for determining a cost from any aggregated PID in the n aggregated PIDs to any other aggregated PID in the n aggregated PIDs.

A first aggregated PID is any PID in the n aggregated PIDs; a second PID is different from the first PID and is any other aggregated PID in the n aggregated PIDs. Therefore, a cost from the first aggregated PID to the second aggregated PID is a cost from any aggregated PID in the n aggregated PIDs to any other aggregated PID in the n aggregated PIDs.

A method for determining the cost from the first aggregated PID to the second aggregated PID includes:
determining a cost from each basic PID in the first aggregated PID to each basic PID in the second aggregated PID separately; and
processing, according to a preset algorithm, the cost from each basic PID in the first aggregated PID to each basic PID in the second aggregated PID separately, so as to obtain the cost from the first aggregated PID to the second aggregated PID.

Optionally, the preset algorithm includes arithmetic averaging, weighted averaging, random selection, partial arithmetic averaging, and partial weighted averaging, and certainly may further include another feasible algorithm.

In this embodiment, for each aggregated PID in the n aggregated PIDs, a cost from each aggregated PID in the n aggregated PIDs to each of other aggregated PIDs in the n aggregated PIDs may be determined according to the method for determining the cost from the first aggregated PID to the second aggregated PID.

Using that an aggregated PID a={PID1, PID2}, an aggregated PID b={PID3, PID4}, and an aggregated PID c={PID5} are obtained from the basic PID1 to the basic PID5 according to the structural information of the aggregated PIDs as an example, the first aggregated PID and the second aggregated PID may respectively be PIDa and PIDb, PIDa and PIDc, PIDb and PIDa, PIDb and PIDc, PIDc and PIDa, or PIDc and PIDb. An aggregation layer costmap includes a cost from PIDa to PIDb, a cost from PIDa to PIDc, a cost from PIDb to PIDa, a cost from PIDb to PIDc, a cost from PIDc to PIDa, and a cost from PIDc to PIDa The foregoing six costs are determined by using a same method, and therefore a method for determining any one of the costs needs to be disclosed only. A specific method for determining the cost from PIDa to PIDb is disclosed in this embodiment.

The method for determining the cost from PIDa to PIDb includes the following content:
Costs from PID1 and PID2 in PID a to PID3 and PID4 in PID b are separately determined. Exemplarily, cost1-3 from PID1 to PID3, cost1-4 from PID1 to PID4, cost2-3 from PID2 to PID3, and cost2-4 from PID2 to PID4 may be found in a base layer costmap.

Then, the costs from PID1 and PID2 in PID a to PID3 and PID4 in PID b are processed according to a preset algorithm such as arithmetic averaging, weighted averaging, random selection, partial arithmetic averaging, or partial weighted averaging, so as to obtain the cost from PID a to PID b, which is denoted as cost (a-b). Specifically, when a preset cost aggregation rule is arithmetic averaging, cost (a-b) from PID a to PID b is an arithmetic average value of all the foregoing costs, that is, cost (a-b)= (cost1-3+cost1-4+cost2-3+cost2-4)/4.

When the preset cost aggregation rule is weighted averaging, cost (a-b) from PID a to PID b is a weighted average value of all the foregoing costs, that is, cost(a-b)= (η1cost1-3+η2cost1-4-f-η3cost2-3+η4cost2-4)/4, where η1-η4 are weighted factors, which indicate a weight of a corresponding cost.

When the preset cost aggregation rule is random selection, cost (a-b) from PID a to PID b is any one of the foregoing costs. For example, cost (a-b)= cost2-3, or cost (a-b)= cost1-4.

When the preset cost aggregation rule is partial arithmetic averaging, cost (a-b) from PID a to PID b is an arithmetic average value of a part of the foregoing costs. For example, cost (a-b)= (cost1-3+cost1-4+cost2-4)/3.

When the preset cost aggregation rule is partial weighted averaging, cost (a-b) from PID a to PID b is a weighted average value of a part of the foregoing costs. For example, cost(a-b)=(η1cost1-3-+η4cost2-4)/2, or cost(a-b)=(η2cost1-4+η3cost2-3)/2, where η1-η4 are weighted factors, which indicate a weight of a corresponding cost. Hence, an aggregation layer networkmap and an aggregation layer costmap are obtained. Further, granularity layer indication information may be carried in the aggregation layer networkmap and the aggregation layer costmap. Exemplarily, granularity layer indication information may be carried in the aggregation layer networkmap and the aggregation layer costmap by adding a new field or by using an existing field. The indication field of the aggregation layer may be denoted as level-1. A PID granularity of an aggregation layer networkmap and an aggregation layer costmap that are generated according to the method provided in this embodiment of the invention is coarser than a PID granularity of a base layer networkmap and a base layer costmap, while a total amount of data of the aggregation layer networkmap and the aggregation layer costmap is significantly less than that of the base layer networkmap and the base layer costmap. Because networkmaps and costmaps with different PID granularities exist, a corresponding networkmap and a corresponding costmap may be provided according to a requirement of a client on a PID granularity. Optionally, this embodiment may further include the following content:
204. An Alto client sends a request message to the Alto server, so that the Alto server sends a corresponding networkmap and a corresponding costmap to the Alto client according to the request message.

Exemplarily, the request message of the Alto client may request, from the Alto server by carrying one type or multiple types of information indicating a PID granularity, a networkmap and a costmap that are to be acquired. The information indicating a PID granularity may be application type information, such as video on demand, file download, and web browsing, which is corresponding to a resource type requested by a client, and the information indicating a PID granularity may also be target granularity layer information. The target granularity layer message is granularity layer indication information determined by the Alto client according to a required application type.

205. The Alto server sends the corresponding networkmap and the corresponding costmap to the Alto client after the Alto server determines, according to the request message sent by the Alto client, the networkmap and the costmap that the Alto client requests to acquire.

Optionally, the Alto server sends an aggregation layer networkmap and an aggregation layer costmap to the Alto client after the Alto server determines, according to the request message sent by the Alto client, that the Alto client requests to acquire the aggregation layer networkmap and the aggregation layer costmap. For example, the Alto client sends application type information of a video on demand request of a user, and the Alto server queries granularity layer indication information, such as an indication field level-1, corresponding to the video on demand request of the user; then, the Alto server determines that the Alto client requests to acquire the aggregation layer networkmap and the aggregation layer costmap, and subsequently sends a networkmap and a costmap that include the indication field level-1. Optionally, the Alto server sends a base layer networkmap and a base layer costmap to the Alto client after the Alto server determines, according to the request message sent by the Alto client, that the Alto client requests to acquire the base layer networkmap and the base layer costmap. For example, the target granularity layer information sent by the Alto client is an indication field level-0, and then the Alto server determines that the Alto client requests to acquire a base layer networkmap and a base layer costmap; subsequently, the Alto server sends a networkmap and a costmap that include the indication field level-0 to the Alto client.

Optionally, the Alto server sends a networkmap with a higher priority in a base layer networkmap and an aggregation layer networkmap to the Alto client, and further sends a costmap with a higher priority in a base layer costmap and an aggregation layer networkmap after the Alto server determines, according to the request message sent by the Alto client, that the Alto client requests to acquire the base layer networkmap, the base layer costmap, the aggregation layer networkmap, and the aggregation layer costmap. For example, a request of the Alto client includes application type information of a video on demand request sent by a user and target granularity layer information with an indication field of level-0, where a priority of the target granularity layer information is higher than a priority of the application type information. The Alto server finds that an indication field corresponding to the video on demand request of the user is level-1, but the indication field of the target granularity layer information is level-0; then, the Alto server sends the target granularity layer information with a higher priority, that is, a base layer networkmap and a base layer costmap that include the indication field level-0, to the Alto client.

Optionally, the Alto server sends a default networkmap and a default costmap to the Alto server after the Alto server determines that the request message, sent by the application layer traffic optimization client Alto client, for requesting to acquire a networkmap and a costmap does not indicate a requested networkmap or a requested costmap. For example, if the request message of the Alto client does not include any message indicating a PID granularity, the Alto server sends a network map and a cost map of a default granularity layer to the Alto client. The default granularity layer may be a base layer or an aggregation layer preset by a network system according to an actual situation, and may also be a base layer.

206. The Alto client determines node resources according to the networkmap and the costmap that are sent by the Alto server.

In this embodiment, a total amount of data of the aggregation layer networkmap and the aggregation layer costmap that are generated by the Alto server is significantly less than that of a base layer networkmap and a base layer costmap. Therefore, a network structure becomes simpler. Subsequently, according to a PID granularity, the Alto server sends the aggregation layer networkmap and the aggregation layer costmap to the Alto client, or sends the base layer networkmap and the base layer costmap to the Alto client. Compared with sending the base layer networkmap and the base layer costmap under any circumstance, less bandwidth is occupied, thereby saving network resources.

It should be noted that a process of forming an aggregation layer networkmap and an aggregation layer costmap is described in detail in the foregoing embodiment, and a server may further predetermine the total number M of generated aggregation layers according to an actual situation such as line layout in a network. In accordance with a manner of steps 201-203, a networkmap and a costmap of an N^{th} aggregation layer are formed according to structural information of a PID of the N^{th} aggregation layer and a networkmap and a costmap of an N-1^{th} aggregation layer. N is greater than or equal to 2, and less than or equal to the preset total number M of aggregation layers. Exemplarily, the total number of aggregation layers is set to 2. Then, the server establishes a first aggregated PID and a networkmap and a costmap of a first aggregation layer according to a basic PID and a networkmap and a costmap of a base layer; and establishes a second aggregated PID and a networkmap and a costmap of a second aggregation layer according to the first aggregated PID and the networkmap and the costmap of the first aggregation layer. A specific establishing process is the same with the process of establishing the foregoing first aggregation layer, and details are not described herein again.

Further, after the networkmap and the costmap of the second aggregation layer are obtained, granularity layer indication information may be carried in the networkmap and the costmap of the second aggregation layer. The granularity layer indication information may be carried in the networkmap and the costmap of the second aggregation layer by adding a new field or by using an existing field. The indication field of the second aggregation layer may be denoted as level-2.

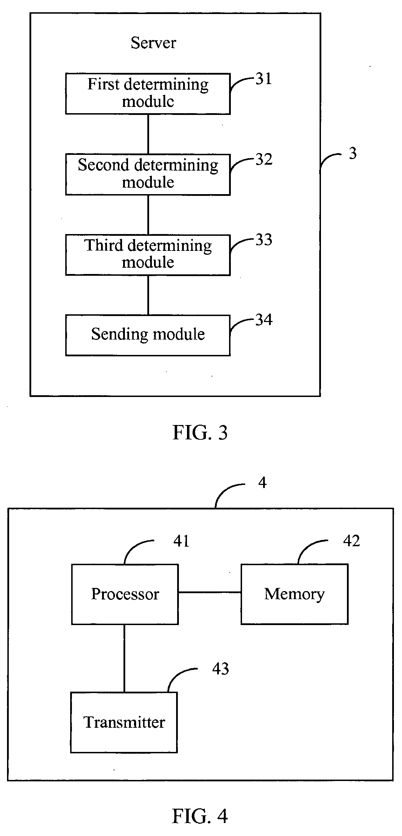

It may be understood that the foregoing embodiment only describes a situation in which one Alto client interacts with one Alto server for one time. It may be understood that when multiple Alto clients interact with one Alto server, or one Alto client interacts with one Alto server for multiple times, steps 201-203 may be performed only once, but steps 204-206 need to be performed for multiple times. The present invention further provides a server 3 shown in FIG. 3. The server 3 is configured to implement a method in an embodiment corresponding to FIG. 1 or FIG. 2. The server is an Alto Server in the embodiment corresponding to FIG. 1 or FIG. 2. The server 3 includes the following content:
a first determining module 31, configured to determine structural information of n aggregated network location identifiers PIDs, where the n aggregated PIDs are formed by aggregation of m basic PIDs, and n is less than m;
a second determining module 32, configured to determine, according to a base layer networkmap corresponding to the m basic PIDs and structural information of each aggregated PID, an aggregation layer networkmap corresponding to the n aggregated PIDs, where the structural information of each aggregated PID indicates a basic PID separately included in each aggregated PID; and
a third determining module 33, configured to determine, according to a base layer costmap corresponding to the m basic PIDs and the structural information of each aggregated PID, an aggregation layer costmap corresponding to the n aggregated PIDs.

A PID granularity of an aggregation layer networkmap and an aggregation layer costmap that are determined by a server shown in FIG. 3 is coarser than a PID granularity of a base layer networkmap and a base layer costmap, while a total amount of data of the aggregation layer networkmap and the aggregation layer costmap is significantly less than that of the base layer networkmap and the base layer costmap. Because networkmaps and costmaps with different PID granularities exist, a corresponding networkmap and a corresponding costmap may be provided according to a requirement of a client on a PID granularity.

Optionally, the base layer networkmap includes a correspondence between the m basic PIDs and IP addresses of network devices covered by the m basic PIDs;
the aggregation layer networkmap includes a correspondence between
the n aggregated PIDs and the IP addresses of the network devices covered by the m basic PIDs;
the base layer costmap includes a cost from each basic PID in the m basic PIDs to each of other basic PIDs in the m basic PIDs; and the aggregation layer costmap includes a cost from each aggregated PID in the n aggregated PIDs to each of other aggregated PIDs in the n aggregated PIDs.

Optionally, each IP address in the IP addresses of the network devices covered by the m basic PIDs is corresponding to a unique basic PID, and each IP address in the IP addresses of the network devices covered by the m basic PIDs is corresponding to a unique aggregated PID.

Further, the n aggregated PIDs include a first aggregated PID and a second aggregated PID, and the aggregation layer costmap includes a cost from the first aggregated PID to the second aggregated PID and a cost from the second aggregated PID to the first aggregated PID; and
the third determining module 33 is specifically configured to determine, for each aggregated PID in the n aggregated PIDs, a cost from each aggregated PID in the n aggregated PIDs to each of other aggregated PIDs in the n aggregated PIDs according to a method for determining the cost from the first aggregated PID to the second aggregated PID, where the method for determining the cost from the first aggregated PID to the second aggregated PID includes: determining a cost from each basic PID in the first aggregated PID to each basic PID in the second aggregated PID separately; and processing, according to a preset algorithm, the cost from each basic PID in the first aggregated PID to each basic PID in the second aggregated PID separately, so as to obtain the cost from the first aggregated PID to the second aggregated PID.

Further, the server 3 further includes:
a sending module 34, configured to send the aggregation layer networkmap and the aggregation layer costmap to an Alto client after it is determined, according to a request message sent by the application layer traffic optimization client Alto client, that the Alto client requests to acquire the aggregation layer networkmap and the aggregation layer costmap; or
configured to send the base layer networkmap and the base layer costmap to an Alto client after the Alto server determines, according to a request message sent by the application layer traffic optimization client Alto client, that the Alto client requests to acquire the base layer networkmap and the base layer costmap; or
configured to send a networkmap with a higher priority in the base layer networkmap and the aggregation layer networkmap to an Alto client, and further send a costmap with a higher priority in the base layer costmap and the aggregation layer networkmap after the Alto server determines, according to a request message sent by the application layer traffic optimization client Alto client, that the Alto client requests to acquire the base layer networkmap, the base layer costmap, the aggregation layer networkmap, and the aggregation layer costmap; or configured to send a default networkmap and a default costmap to the Alto server after the Alto server determines that a request message, sent by an application layer traffic optimization client Alto client, for requesting to acquire a networkmap and a costmap does not indicate a requested networkmap or a requested costmap.

As shown in FIG. 4, an embodiment of the present invention further provides a server 4, where the server 4 is an Alto server in an embodiment corresponding to FIG. 1 or

FIG. 2 and includes: a processor 41 and a memory 42. The processor 41 and the memory 42 in the server 4 cooperate with each other, so as to implement a method in the embodiment corresponding to FIG. 1 or FIG. 2.

The processor 41 is configured to determine structural information of n aggregated network location identifiers PIDs, where the n aggregated PIDs are formed by aggregation of m basic PIDs, and n is less than m; determine, according to a base layer networkmap corresponding to the m basic PIDs and structural information of each aggregated PID, an aggregation layer networkmap corresponding to the n aggregated PIDs, where the structural information of each aggregated PID indicates a basic PID separately included in each aggregated PID; and determine, according to a base layer costmap corresponding to the m basic PIDs and the structural information of each aggregated PID, an aggregation layer costmap corresponding to the n aggregated PIDs.

A PID granularity of an aggregation layer networkmap and an aggregation layer costmap that are generated by the server 4 is coarser than a PID granularity of a base layer networkmap and a base layer costmap, while a total amount of data of the aggregation layer networkmap and the aggregation layer costmap is significantly less than that of the base layer networkmap and the base layer costmap. Because networkmaps and costmaps with different PID granularities exist, a corresponding networkmap and a corresponding costmap may be provided according to a requirement of a client on a PID granularity.

Optionally, the base layer networkmap includes a correspondence between the m basic PIDs and IP addresses of network devices covered by the m basic PIDs; the aggregation layer networkmap includes a correspondence between the n aggregated PIDs and the IP addresses of the network devices covered by the m basic PIDs; the base layer costmap includes a cost from each basic PID in the m basic PIDs to each of other basic PIDs in the m basic PIDs; and the aggregation layer costmap includes a cost from each aggregated PID in the n aggregated PIDs to each of other aggregated PIDs in the n aggregated PIDs.

Optionally, the base layer networkmap, the aggregation layer networkmap, the base layer costmap, and the aggregation layer costmap are saved in the memory 42.

Optionally, each IP address in the IP addresses of the network devices covered by the m basic PIDs is corresponding to a unique basic PID, and each IP address in the IP addresses of the network devices covered by the m basic PIDs is corresponding to a unique aggregated PID.

Further, the n aggregated PIDs include a first aggregated PID and a second aggregated PID, and the aggregation layer costmap includes a cost from the first aggregated PID to the second aggregated PID and a cost from the second aggregated PID to the first aggregated PID; and
the processor 41 is configured to determine, for each aggregated PID in the n aggregated PIDs, a cost from each aggregated PID in the n aggregated PIDs to each of other aggregated PIDs in the n aggregated PIDs according to a method for determining the cost from the first aggregated PID to the second aggregated PID, where the method for determining the cost from the first aggregated PID to the second aggregated PID includes: determining a cost from each basic PID in the first aggregated PID to each basic PID in the second aggregated PID separately; and processing, according to a preset algorithm, the cost from each basic PID in the first aggregated PID to each basic PID in the second aggregated PID separately, so as to obtain the cost from the first aggregated PID to the second aggregated PID.

Further, the server 4 further includes:
a transmitter 43, configured to send the aggregation layer networkmap and the aggregation layer costmap to an Alto client after it is determined, according to a request message sent by the application layer traffic optimization client Alto client, that the Alto client requests to acquire the aggregation layer networkmap and the aggregation layer costmap; or configured to send the base layer networkmap and the base layer costmap to an Alto client after the Alto server determines, according to a request message sent by the application layer traffic optimization client Alto client, that the Alto client requests to acquire the base layer networkmap and the base layer costmap; or configured to send a networkmap with a higher priority in the base layer networkmap and the aggregation layer networkmap to an Alto client, and further send a costmap with a higher priority in the base layer costmap and the aggregation layer networkmap after the Alto server determines, according to a request message sent by the application layer traffic optimization client Alto client, that the Alto client requests to acquire the base layer networkmap, the base layer costmap, the aggregation layer networkmap, and the aggregation layer costmap; or configured to send a default networkmap and a default costmap to the Alto server after the Alto server determines that a request message, sent by an application layer traffic optimization client Alto client, for requesting to acquire a networkmap and a costmap does not indicate a requested networkmap or a requested costmap.

A person of ordinary skill in the art may be aware that, in combination with the examples described in the embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention. When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for generating an aggregation layer networkmap and an aggregation layer costmap, comprising:
determining (101), by an application layer traffic optimization server, Alto server, structural infonnation of n aggregated network location identifiers PIDs, wherein the n aggregated PIDs are formed by aggregation of m basic PIDs, and n is less than m;
determining (102), by the Alto server according to a base layer networkmap corresponding to the m basic PIDs and structural information of each aggregated PID, an aggregation layer networkmap corresponding to the n aggregated PIDs, wherein the structural information of each aggregated PID indicates a basic PID separately comprised in each aggregated PID;
wherein the base layer networkmap comprises a correspondence between the m basic PIDs and IP addresses of network devices covered by the m basic PIDs;
the aggregation layer networkmap comprises a correspondence between the n aggregated PIDs and the IP addresses of the network devices covered by the m basic PIDs;
wherein each IP address in the IP addresses of the network devices covered by the m basic PIDs is corresponding to a unique basic PID, and each IP address in the IP addresses of the network devices covered by the m basic PIDs is corresponding to a unique aggregated PID; and
determining (103), by the Alto server according to a base layer costmap corresponding to the m basic PIDs and the structural information of each aggregated PID, an aggregation layer costmap corresponding to the n aggregated PIDs.

2. The method according to claim 1, wherein
the base layer costmap comprises a cost from each basic PID in the m basic PIDs to each of other basic PIDs in the m basic PIDs; and
the aggregation layer costmap comprises a cost from each aggregated PID in the n aggregated PIDs to each of other aggregated PIDs in the n aggregated PIDs.

3. The method according to claim 2, wherein the n aggregated PIDs comprise a first aggregated PID and a second aggregated PID, and the aggregation layer costmap comprises a cost from the first aggregated PID to the second aggregated PID and a cost from the second aggregated PID to the first aggregated PID;
a method for determining the cost from the first aggregated PID to the second aggregated PID comprises:
determining a cost from each basic PID in the first aggregated PID to each basic PID in the second aggregated PID separately; and processing, according to a preset algorithm, the cost from each basic PID in the first aggregated PID to each basic PID in the second aggregated PID separately, so as to obtain the cost from the first aggregated PID to the second aggregated PID; and
for each aggregated PID in the n aggregated PIDs, a cost from each aggregated PID in the n aggregated PIDs to each of other aggregated PIDs in the n aggregated PIDs is determined according to the method for determining the cost from the first aggregated PID to the second aggregated PID.

4. The method according to any one of claims 1 to 3, further comprising:
sending the aggregation layer networkmap and the aggregation layer costmap to an Alto client after the Alto server determines, according to a request message sent by the application layer traffic optimization client, Alto client, that the Alto client requests to acquire the aggregation layer networkmap and the aggregation layer costmap;
or,
sending the base layer networkmap and the base layer costmap to an Alto client after the Alto server determines, according to a request message sent by the application layer traffic optimization client, Alto client, that the Alto client requests to acquire the base layer networkmap and the base layer costmap;
or,
sending a networkmap with a higher priority in the base layer networkmap and the aggregation layer networkmap to an Alto client, and further sending a costmap with a higher priority in the base layer costmap and the aggregation layer costmap after the Alto server determines, according to a request message sent by the application layer traffic optimization client, Alto client, that the Alto client requests to acquire the base layer networkmap, the base layer costmap, the aggregation layer networkmap, and the aggregation layer costmap;
or,
sending a default networkmap and a default costmap to the Alto client after the Alto server determines that a request message, sent by the application layer traffic optimization client, Alto client, for requesting to acquire a networkmap and a costmap does not indicate a requested networkmap or a requested costmap.

5. A server (3), comprising:
a first determining module (31), configured to determine structural information of n aggregated network location identifiers PIDs, wherein the n aggregated PIDs are formed by aggregation of m basic PIDs, and n is less than m;
a second determining module (32), configured to determine, according to a base layer networkmap corresponding to the m basic PIDs and structural information of each aggregated PID, an aggregation layer networkmap corresponding to the n aggregated PIDs, wherein the structural information of each aggregated PID indicates a basic PID separately comprised in each aggregated PID,
wherein the base layer networkmap comprises a correspondence between the m basic PIDs and IP addresses of network devices covered by the m basic PIDs;
the aggregation layer networkmap comprises a correspondence between the n aggregated PIDs and the IP addresses of the network devices covered by the m basic PIDs,
wherein each IP address in the IP addresses of the network devices covered by the m basic PIDs is corresponding to a unique basic PID, and each IP address in the IP addresses of the network devices covered by the m basic PIDs is corresponding to a unique aggregated PID; and
a third determining module (33), configured to determine, according to a base layer costmap corresponding to the m basic PIDs and the structural information of each aggregated PID, an aggregation layer costmap corresponding to the n aggregated PIDs.

6. The server according to claim 5, wherein
the base layer costmap comprises a cost from each basic PID in the m basic PIDs to each of other basic PIDs in the m basic PIDs; and
the aggregation layer costmap comprises a cost from each aggregated PID in the n aggregated PIDs to each of other aggregated PIDs in the n aggregated PIDs.

7. The server according to claim 6, wherein the n aggregated PIDs comprise a first aggregated PID and a second aggregated PID, and the aggregation layer costmap comprises a cost from the first aggregated PID to the second aggregated PID and a cost from the second aggregated PID to the first aggregated PID; and
the third determining module is configured to determine, for each aggregated PID in the n aggregated PIDs, a cost from each aggregated PID in the n aggregated PIDs to each of other aggregated PIDs in the n aggregated PIDs according to a method for determining the cost from the first aggregated PID to the second aggregated PID, wherein the method for determining the cost from the first aggregated PID to the second aggregated PID comprises: determining a cost from each basic PID in the first aggregated PID to each basic PID in the second aggregated PID separately; and processing, according to a preset algorithm, the cost from each basic PID in the first aggregated PID to each basic PID in the second aggregated PID separately, so as to obtain the cost from the first aggregated PID to the second aggregated PID.

8. The server according to any one of claims 5 to 7, further comprising:
a sending module (34), configured to send the aggregation layer networkmap and the aggregation layer costmap to an Alto client after it is determined, according to a request message sent by an application layer traffic optimization client, Alto client, that the Alto client requests to acquire the aggregation layer networkmap and the aggregation layer costmap; or
configured to send the base layer networkmap and the base layer costmap to an Alto client after the Alto server determines, according to a request message sent by the application layer traffic optimization client, Alto client, that the Alto client requests to acquire the base layer networkmap and the base layer costmap; or
configured to send a networkmap with a higher priority in the base layer networkmap and the aggregation layer networkmap to an Alto client, and further send a costmap with a higher priority in the base layer costmap and the aggregation layer costmap after the Alto server determines, according to a request message sent by the application layer traffic optimization client, Alto client, that the Alto client requests to acquire the base layer networkmap, the base layer costmap, the aggregation layer networkmap, and the aggregation layer costmap; or
configured to send a default networkmap and a default costmap to the Alto client after the Alto server determines that a request message, sent by an application layer traffic optimization client, Alto client, for requesting to acquire a networkmap and a costmap does not indicate a requested networkmap or a requested costmap.

## Patentansprüche

1. Verfahren zum Erzeugen einer Aggregationsschicht-Netzwerkabbildung und einer Aggregationsschicht-Kostenabbildung, umfassend:
Bestimmen (101) durch einen Anwendungsschicht-Verkehrsoptimierungsserver, Alto-Server, struktureller Informationen von n aggregierten Netzwerkstellenidentifizierungen PIDs, wobei die n aggregierten PIDs durch Aggregation von m Basis-PIDs gebildet werden, und wobei n weniger als m ist;
Bestimmen (102) durch den Alto-Server gemäß einer Grundschicht-Netzwerkabbildung, die den m Basis-PIDs und den strukturellen Informationen von jeder aggregierten PID entspricht, einer Aggregationsschicht-Netzwerkabbildung, die denn n aggregierten PIDs entspricht, wobei die strukturellen Informationen jeder aggregierten PID eine Basis-PID separat angeben, die jede aggregierte PID umfasst;
wobei die Grundschicht-Netzwerkabbildung eine Entsprechung zwischen den m Basis-PIDs und IP-Adressen von Netzwerkvorrichtungen umfasst, die durch die m Basis-PIDs abgedeckt werden;
wobei die Aggregationsschicht-Netzwerkabbildung eine Entsprechung zwischen den n aggregierten PIDs und den IP-Adressen der Netzwerkvorrichtungen umfasst, die durch die m Basis-PIDs abgedeckt werden;
wobei jede IP-Adresse in den IP-Adressen der Netzwerkvorrichtungen, die durch die m Basis-PIDs abgedeckt werden, einer einzigartigen Basis-PID entspricht, und jede IP-Adresse in den IP-Adressen der Netzwerkvorrichtungen, die durch die m Basis-PIDs abgedeckt werden, einer einzigartigen aggregierten PID entspricht; und
Bestimmen (103) durch den Alto-Server gemäß einer Grundschicht-Kostenabbildung, die den m Basis-PIDs und den strukturellen Informationen von jeder aggregierten PID entspricht, einer Aggregationsschicht-Kostenabbildung, die den aggregierten PIDs entspricht.

2. Verfahren nach Anspruch 1, wobei:
die Grundschicht-Kostenabbildung Kosten von jeder Basis-PID in den m Basis-PIDs zu jeder der anderen Basis-PIDs in den m Basis-PIDs umfasst; und
die Aggregationsschicht-Kostenabbildung Kosten von jeder aggregierten PID in den n aggregierten PIDs zu jeder der anderen aggregierten PIDs in den n aggregierten PIDs umfasst.

3. Verfahren nach Anspruch 2, wobei die n aggregierten PIDs eine erste aggregierte PID und eine zweite aggregierte PID umfassen, und die Aggregationsschicht-Kostenabbildung Kosten von der ersten aggregierten PID zu der zweiten aggregierten PID und Kosten von der zweiten aggregierten PID zu der ersten aggregierten PID umfasst;
ein Verfahren zum Bestimmen der Kosten von der ersten aggregierten PID zu der zweiten aggregierten PID umfasst:
separates Bestimmen von Kosten von jeder Basis-PID in der ersten aggregierten PID zu jeder Basis-PID in der zweiten aggregierten PID; und separates Verarbeiten gemäß einem voreingestellten Algorithmus der Kosten von jeder Basis-PID in der ersten aggregierten PID zu jeder Basis-PID in der zweiten aggregierten PID, so dass die Kosten von der ersten aggregierten PID zu der zweiten aggregierten PID erhalten werden; und
für jede aggregierte PID in den n aggregierten PIDs werden Kosten von jeder aggregierten PID in den n aggregierten PIDs zu jeder der anderen aggregierten PIDs in den n aggregierten PIDs gemäß dem Verfahren zum Bestimmen der Kosten von der ersten aggregierten PID zu der zweiten aggregierten PID bestimmt.

4. Verfahren nach irgendeinem der Ansprüche 1 bis 3, des Weiteren Folgendes umfassend:
Senden der Aggregationsschicht-Netzwerkabbildung und der Aggregationsschicht-Kostenabbildung an einen Alto-Client, nachdem der Alto-Server gemäß einer Anforderungsmitteilung bestimmt, die der Anwendungsschicht-Verkehrsoptimierungsclient, Alto-Client, sendet, dass der Alto-Client anfordert, die Aggregationsschicht-Netzwerkabbildung und die Aggregationsschicht-Kostenabbildung zu erfassen;
oder
Senden der Grundschicht-Netzwerkabbildung und der Grundschicht-Kostenabbildung an einen Alto-Client, nachdem der Alto-Server gemäß einer Anforderungsmitteilung bestimmt, die der Anwendungsschicht-Verkehrsoptimierungsclient, Alto-Client, sendet, dass der Alto-Client anfordert, die Grundschicht-Netzwerkabbildung und die Grundschicht-Kostenabbildung zu erfassen;
oder
Senden einer Netzwerkabbildung mit einer höheren Priorität in der Grundschicht-Netzwerkabbildung und der Aggregationsschicht-Netzwerkabbildung an einen Alto-Client, und des Weiteren Senden einer Kostenabbildung mit einer höheren Priorität in der Grundschicht-Kostenabbildung und der Aggregationsschicht-Kostenabbildung,
nachdem der Alto-Server gemäß einer Anforderungsmitteilung bestimmt, die der Anwendungsschicht-Verkehrsoptimierungsclient, Alto-Client, sendet, dass der Alto-Client anfordert, die Grundschicht-Netzwerkabbildung, die Grundschicht-Kostenabbildung, die Aggregationsschicht-Netzwerkabbildung und die Aggregationsschicht-Kostenabbildung zu erfassen;
oder
Senden einer Standard-Netzwerkabbildung und einer Standard-Kostenabbildung an den Alto-Client, nachdem der Alto-Server bestimmt, dass eine Anforderungsmitteilung, die der Anwendungsschicht-Verkehrsoptimierungsclient, Alto-Client, zum Anfordern sendet, eine Netzwerkabbildung und Kostenabbildung zu erfassen, keine angeforderte Netzwerkabbildung oder angeforderte Kostenabbildung anzeigt.

5. Server (3), umfassend:
ein erstes Bestimmungsmodul (31), das dazu ausgestaltet ist, strukturelle Informationen von n aggregierten Netzwerkstellenidentifizierungen PIDs zu bestimmen, wobei die n aggregierten PIDs durch Aggregation von m Basis-PIDs gebildet werden, und wobei n weniger als m ist;
ein zweites Bestimmungsmodul (32), das dazu ausgestaltet ist, gemäß einer Grundschicht-Netzwerkabbildung, die den m Basis-PIDs und den strukturellen Informationen von jeder aggregierten PID entspricht, eine Aggregationsschicht-Netzwerkabbildung zu bestimmen, die den n aggregierten PIDs entspricht, wobei die strukturellen Informationen von jeder aggregierten PID eine Basis-PID separat angeben, die jede aggregierte PID umfasst,
wobei die Grundschicht-Netzwerkabbildung eine Entsprechung zwischen den m Basis-PIDs und IP-Adressen von Netzwerkvorrichtungen umfasst, die durch die m Basis-PIDs abgedeckt werden;
wobei die Aggregationsschicht-Netzwerkabbildung eine Entsprechung zwischen den n aggregierten PIDs und den IP-Adressen der Netzwerkvorrichtungen umfasst, die durch die m Basis-PIDs abgedeckt werden,
wobei jede IP-Adresse in den IP-Adressen der Netzwerkvorrichtungen, die durch die m Basis-PIDs abgedeckt werden, einer einzigartigen Basis-PID entspricht, und jede IP-Adresse in den IP-Adressen der Netzwerkvorrichtungen, die durch die m Basis-PIDs abgedeckt werden, einer einzigartigen aggregierten PID entspricht; und
ein drittes Bestimmungsmodul (33), das dazu ausgestaltet ist, gemäß einer Grundschicht-Kostenabbildung, die den m Basis-PIDs und den strukturellen Informationen von jeder aggregierten PID entspricht, eine Aggregationsschicht-Kostenabbildung zu bestimmen, die den n aggregierten PIDs entspricht.

6. Server nach Anspruch 5, wobei:
die Grundschicht-Kostenabbildung Kosten von jeder Basis-PID in den m Basis-PIDs zu jeder der anderen Basis-PIDs in den m Basis-PIDs umfasst; und
die Aggregationsschicht-Kostenabbildung Kosten von jeder aggregierten PID in den n aggregierten PIDs zu jeder der anderen aggregierten PIDs in den n aggregierten PIDs umfasst.

7. Server nach Anspruch 6, wobei die n aggregierten PIDs eine erste aggregierte PID und eine zweite aggregierte PID umfassen, und die Aggregationsschicht-Kostenabbildung Kosten von der ersten aggregierten PID zu der zweiten PID und Kosten von der zweiten aggregierten PID zu der ersten aggregierten PID umfasst;
und
das dritte Bestimmungsmodul dazu ausgestaltet ist, für jede aggregierte PID in den n aggregierten PIDs Kosten von jeder aggregierten PID in den n aggregierten PIDs zu jeder der anderen aggregierten PIDs in den n aggregierten PIDs gemäß einem Verfahren zum Bestimmen der Kosten von der ersten aggregierten PID zu der zweiten aggregierten PID zu bestimmen, wobei das Verfahren zum Bestimmen der Kosten von der ersten aggregierten PID zu der zweiten aggregierten PID Folgendes umfasst: separates Bestimmen von Kosten von jeder Basis-PID in der ersten aggregierten PID zu jeder Basis-PID in der zweiten aggregierten PID; und separates Verarbeiten gemäß einem voreingestellten Algorithmus der Kosten von jeder Basis-PID in der ersten aggregierten PID zu jeder Basis-PID in der zweiten aggregierten PID, so dass die Kosten von der ersten aggregierten PID zu der zweiten aggregierten PID erhalten werden.

8. Server nach irgendeinem der Ansprüche 5 bis 7, des Weiteren umfassend:
ein Sendemodul (34), das dazu ausgestaltet ist, die Aggregationsschicht-Netzwerkabbildung und die Aggregationsschicht-Kostenabbildung an einen Alto-Client zu senden, nachdem gemäß einer Anforderungsmitteilung, die ein Anwendungsschicht-Verkehrsoptimierungsclient, Alto-Client sendet, bestimmt wurde, dass der Alto-Client anfordert, die Aggregationsschicht-Netzwerkabbildung und die Aggregationsschicht-Kostenabbildung zu erfassen; oder
dazu ausgestaltet ist, die Grundschicht-Netzwerkabbildung und die Grundschicht-Kostenabbildung an einen Alto-Client zu senden, nachdem der Alto-Server gemäß einer Anforderungsmitteilung bestimmt, die der Anwendungsschicht-Verkehrsoptimierungsclient, Alto-Client, sendet, dass der Alto-Client anfordert, die Grundschicht-Netzwerkabbildung und die Grundschicht-Kostenabbildung zu erfassen; oder
dazu ausgestaltet ist, eine Netzwerkabbildung mit einer höheren Priorität in der Grundschicht-Netzwerkabbildung und der Aggregationsschicht-Netzwerkabbildung an einen Alto-Client zu senden, und des Weiteren eine Kostenabbildung mit einer höheren Priorität in der Grundschicht-Kostenabbildung und der Aggregationsschicht-Kostenabbildung zu senden, nachdem der Alto-Server gemäß einer Anforderungsmitteilung bestimmt, die der Anwendungsschicht-Verkehrsoptimierungsclient, Alto-Client sendet, dass der Alto-Client anfordert, die Grundschicht-Netzwerkabbildung, die Grundschicht-Kostenabbildung, die Aggregationsschicht-Netzwerkabbildung und die Aggregationsschicht-Kostenabbildung zu erfassen; oder
dazu ausgestaltet ist, eine Standard-Netzwerkabbildung und eine Standard-Kostenabbildung an den Alto-Client zu senden, nachdem der Alto-Server bestimmt, dass eine Anforderungsmitteilung, die ein Anwendungsschicht-Verkehrsoptimierungsclient, Alto-Client, zum Anfordern sendet, eine Netzwerkabbildung und Kostenabbildung zu erfassen, keine angeforderte Netzwerkabbildung oder angeforderte Kostenabbildung anzeigt.

## Revendications

1. Procédé de génération d'une carte de réseau de couche de regroupement et d'une carte de coût de couche de regroupement, comprenant les étapes suivantes :
détermination (101), par un serveur d'optimisation du trafic de la couche d'application, serveur Alto, d'informations structurales de n identifiants d'emplacement de réseau regroupés, PID, les n PID regroupés étant formés par regroupement de m PID de base et n étant inférieur à m ;
détermination (102), par le serveur Alto conformément à une carte de réseau de couche de base correspondant aux m PID de base et aux informations structurales de chaque PID regroupé, d'une carte de réseau de couche de regroupement correspondant aux n PID regroupés, les informations structurales de chaque PID regroupé indiquant un PID de base compris séparément dans chaque PID regroupé ;
la carte de réseau de couche de base comprenant une correspondance entre les m PID de base et les adresses IP des périphériques de réseau couverts par les m PID de base ;
la carte de réseau de couche de regroupement comprenant une correspondance entre les n PID regroupés et les adresses IP des périphériques de réseau couverts par les m PID de base ;
chaque adresse IP dans les adresses IP des périphériques de réseau couverts par les m PID de base correspondant à un PID de base unique, et chaque adresse IP dans les adresses IP des périphériques de réseau couverts par les m PID de base correspondant à un PID regroupé unique ; et
détermination (103), par le serveur Alto conformément à une carte de coût de couche de base correspondant aux m PID de base et aux informations structurales de chaque PID regroupé, d'une carte de coût de couche de regroupement correspondant aux n PID regroupés.

2. Procédé selon la revendication 1, selon lequel
la carte de coût de couche de base comprend un coût de chaque PID de base dans les m PID de base vers chacun des autres PID de base dans les m PID de base ; et
la carte de coût de couche de regroupement comprend un coût de chaque PID regroupé dans les n PID regroupés vers chacun des autres PID regroupés dans les n PID regroupés.

3. Procédé selon la revendication 2, selon lequel les n PID regroupés comprennent un premier PID regroupé et un deuxième PID regroupé, et la carte de coût de couche de regroupement comprend un coût du premier PID regroupé vers le deuxième PID regroupé et un coût du deuxième PID regroupé vers le premier PID regroupé ;
un procédé de détermination du coût du premier PID regroupé vers le deuxième PID regroupé comprend :
détermination d'un coût de chaque PID de base dans le premier PID regroupé vers chaque PID de base dans le deuxième PID regroupé séparément ; et traitement, conformément à un algorithme prédéfini, du coût de chaque PID de base dans le premier PID regroupé vers chaque PID de base dans le deuxième PID regroupé séparément de manière à obtenir le coût du premier PID regroupé vers le deuxième PID regroupé ; et
pour chaque PID regroupé dans les n PID regroupés, un coût de chaque PID regroupé dans les n PID regroupés vers chacun des autres PID regroupés dans les n PID regroupés est déterminé conformément au procédé de détermination du coût du premier PID regroupé vers le deuxième PID regroupé.

4. Procédé selon l'une quelconque des revendications 1 à 3, comprenant en outre :
envoi de la carte de réseau de couche de regroupement et de la carte de coût de couche de regroupement à un client Alto après que le serveur Alto détermine, conformément à un message de demande envoyé par le client d'optimisation du trafic de la couche d'application, client Alto, que le client Alto demande à acquérir la carte de réseau de couche de regroupement et la carte de coût de couche de regroupement ;
ou
envoi de la carte de réseau de couche de base et de la carte de coût de couche de base à un client Alto après que le serveur Alto détermine, conformément à un message de demande envoyé par le client d'optimisation du trafic de la couche d'application, client Alto, que le client Alto demande à acquérir la carte de réseau de couche de base et la carte de coût de couche de base ;
ou
envoi d'une carte de réseau ayant une priorité supérieure dans la carte de réseau de couche de base et la carte de réseau de couche de regroupement à un client Alto, et de plus envoi d'une carte de coût ayant une priorité supérieure dans la carte de coût de couche de base et la carte de coût de couche de regroupement après que le serveur Alto détermine, conformément à un message de demande envoyé par le client d'optimisation du trafic de la couche d'application, client Alto, que le client Alto demande à acquérir la carte de réseau de couche de base, la carte de coût de couche de base, la carte de réseau de couche de regroupement et la carte de coût de couche de regroupement ;
ou
envoi d'une carte de réseau par défaut et d'une carte de coût par défaut au client Alto après que le serveur Alto détermine qu'un message de demande, envoyé par le client d'optimisation du trafic de la couche d'application, client Alto, servant à demander à acquérir une carte de réseau et une carte de coût n'indique pas une carte de réseau demandée ou une carte de coût demandée.

5. Serveur (3), comprenant :
un premier module de détermination (31) configuré pour déterminer des informations structurales de n identifiants d'emplacement de réseau regroupés, PID, les n PID regroupés étant formés par regroupement de m PID de base et n étant inférieur à m ; un deuxième module de détermination (32) configuré pour déterminer, conformément à une carte de réseau de couche de base correspondant aux m PID de base et aux informations structurales de chaque PID regroupé, une carte de réseau de couche de regroupement correspondant aux n PID regroupés, les informations structurales de chaque PID regroupé indiquant un PID de base compris séparément dans chaque PID regroupé ;
la carte de réseau de couche de base comprenant une correspondance entre les m PID de base et les adresses IP des périphériques de réseau couverts par les m PID de base ;
la carte de réseau de couche de regroupement comprenant une correspondance entre les n PID regroupés et les adresses IP des périphériques de réseau couverts par les m PID de base ;
chaque adresse IP dans les adresses IP des périphériques de réseau couverts par les m PID de base correspondant à un PID de base unique, et chaque adresse IP dans les adresses IP des périphériques de réseau couverts par les m PID de base correspondant à un PID regroupé unique ; et
un troisième module de détermination (33) configuré pour déterminer, conformément à une carte de coût de couche de base correspondant aux m PID de base et aux informations structurales de chaque PID regroupé, une carte de coût de couche de regroupement correspondant aux n PID regroupés.

6. Serveur selon la revendication 5, avec lequel
la carte de coût de couche de base comprend un coût de chaque PID de base dans les m PID de base vers chacun des autres PID de base dans les m PID de base ; et
la carte de coût de couche de regroupement comprend un coût de chaque PID regroupé dans les n PID regroupés vers chacun des autres PID regroupés dans les n PID regroupés.

7. Serveur selon la revendication 6, avec lequel les n PID regroupés comprennent un premier PID regroupé et un deuxième PID regroupé, et la carte de coût de couche de regroupement comprend un coût du premier PID regroupé vers le deuxième PID regroupé et un coût du deuxième PID regroupé vers le premier PID regroupé ; et le troisième module de détermination est configuré pour déterminer, pour chaque PID regroupé dans les n PID regroupés, un coût de chaque PID regroupé dans les n PID regroupés vers chacun des autres PID regroupés dans les n PID regroupés conformément à un procédé de détermination du coût du premier PID regroupé vers le deuxième PID regroupé, le procédé de détermination du coût du premier PID regroupé vers le deuxième PID regroupé comprenant : détermination d'un coût de chaque PID de base dans le premier PID regroupé vers chaque PID de base dans le deuxième PID regroupé séparément ; et traitement, conformément à un algorithme prédéfini, du coût de chaque PID de base dans le premier PID regroupé vers chaque PID de base dans le deuxième PID regroupé séparément de manière à obtenir le coût du premier PID regroupé vers le deuxième PID regroupé.

8. Serveur selon l'une quelconque des revendications 5 à 7, comprenant en outre :
un module d'envoi (34) configuré pour envoyer la carte de réseau de couche de regroupement et la carte de coût de couche de regroupement à un client Alto après qu'il ait été déterminé, conformément à un message de demande envoyé par un client d'optimisation du trafic de la couche d'application, client Alto, que le client Alto demande à acquérir la carte de réseau de couche de regroupement et la carte de coût de couche de regroupement ; ou
configuré pour envoyer la carte de réseau de couche de base et la carte de coût de couche de base à un client Alto après que le serveur Alto détermine, conformément à un message de demande envoyé par le client d'optimisation du trafic de la couche d'application, client Alto, que le client Alto demande à acquérir la carte de réseau de couche de base et la carte de coût de couche de base ; ou
configuré pour envoyer une carte de réseau ayant une priorité supérieure dans la carte de réseau de couche de base et la carte de réseau de couche de regroupement à un client Alto, et de plus envoyer une carte de coût ayant une priorité supérieure dans la carte de coût de couche de base et la carte de coût de couche de regroupement après que le serveur Alto détermine, conformément à un message de demande envoyé par le client d'optimisation du trafic de la couche d'application, client Alto, que le client Alto demande à acquérir la carte de réseau de couche de base, la carte de coût de couche de base, la carte de réseau de couche de regroupement et la carte de coût de couche de regroupement ; ou
configuré pour envoyer une carte de réseau par défaut et une carte de coût par défaut au client Alto après que le serveur Alto détermine qu'un message de demande, envoyé par un client d'optimisation du trafic de la couche d'application, client Alto, pour demander à acquérir une carte de réseau et une carte de coût n'indique pas une carte de réseau demandée ou une carte de coût demandée.
